# EUROPÄISCHE PATENTSCHRIFT

(11) **EP 1 337 464 B1**
(45) Veröffentlichungstag und Bekanntmachung des Hinweises auf die Patenterteilung: **04.05.2005**
(21) Anmeldenummer: 01993581.6
(22) Anmeldetag: 02.11.2001
(51) Int. Cl.: C01B 33/107, C01B 33/04, C01B 33/029, C01F 7/56

(54) **VERFAHREN ZUR ENTFERNUNG VON ALUMINIUM AUS CHLORSILANEN**
METHOD FOR REMOVING ALUMINIUM FROM CHLOROSILANES
PROCEDE POUR SEPARER L'ALUMINIUM DE CHLOROSILANES

(30) Priorität: 13.11.2000 DE 10056194
(43) Veröffentlichungstag der Anmeldung: 27.08.2003
(73) Patentinhaber: SOLARWORLD AKTIENGESELLSCHAFT, 53113 Bonn (DE)
(72) Erfinder: BLOCK, Hans-Dieter, 51381 Leverkusen (DE); WEBER, Rainer, 51519 Odenthal (DE); OLF, Günter, 51373 Leverkusen (DE); LEIMKÜHLER, Hans-Joachim, 51375 Leverkusen (DE); SCHÄFER, Johannes-Peter, 51515 Kürten (DE)
(74) Vertreter: Rau, Albrecht
(86) Internationale Anmeldenummer: PCT/EP2001/012677
(87) Internationale Veröffentlichungsnummer: WO 2002/038497

(56) Entgegenhaltungen:
- FR-A- 2 596 301
- US-A- 4 385 964
- PATENT ABSTRACTS OF JAPAN vol. 006, no. 011 (C-088), 22. Januar 1982 (1982-01-22) & JP 56 136601 A (KOUJIYUNDO SILICON KK), 26. Oktober 1981 (1981-10-26)

## Beschreibung

Die Erfindung betrifft ein Verfahren zur Abtrennung von Aluminium aus Chlorsilanen, insbesondere zur Abtrennung von Aluminiumtrichlorid aus Siliciumtetrachlorid oder Trichlorsilan oder Mischungen von Siliciumtetrachlorid und Trichlorsilan.

Die Herstellung von Chlorsilanen erfolgt technisch durch die Umsetzung von Silicium mit Chlorwasserstoff oder mit Siliciumtetrachlorid und Wasserstoff. Dabei werden die metallischen Verunreinigungen, die im metallurgischen Silicium enthalten sind, zu einem erheblichen Teil in Metallchloride überführt. Handelsübliches metallurgisches Silicium hat im allgemeinen einen Reinheitsgrad von 90 bis 99,3 %, der Rest ist hauptsächlich Eisen sowie Aluminium in Anteilen von 0,01 bis 0,5 %.

Da Chlorsilane unter anderem zur Darstellung von hochreinem Silicium verwendet werden, müssen die Metallchloride möglichst vollständig abgetrennt werden. Die Abtrennung des entstandenen Eisenchlorids erfolgt mechanisch über einen Zyklon oder einen Gasfilter, die Abtrennung des Aluminiumtrichlorids gestaltet sich jedoch aufgrund seiner hohen Flüchtigkeit (Sublimationstemperatur von 178°C) schwieriger.

Das Problem der Abtrennung von Aluminium aus den Chlorsilanen Siliciumtetrachlorid (STC) und Trichlorsilan (TCS) und deren Mischungen, wobei das Aluminium in diesen Medien nahezu ausschließlich als Aluminiumtrichlorid vorliegt, tritt bei allen Schritten zur Reinigung besagter Chlorsilane durch Destillation auf. Zurückzuführen ist die Anwesesenheit von Aluminiumchlorid auf den Gehalt des für die Produktion der Chlorsilane eingesetzten Siliciums in Höhe von einigen hundert bis zu einigen tausend ppm. Beim Syntheseschritt der Chlorsilane Siliciumtetrachlorid und Trichlorsilan wird metallurgisches Silicium unterschiedlichen Siliciumgehaltes und ggf. enthaltend erhebliche Eisen-Anteile mit Chlorwasserstoff oder mit Siliciumtetrachlorid/Wasserstoff-Mischungen bei erhöhter Temperatur umgesetzt. Dabei wandelt sich das enthaltene Aluminium in Aluminiumtrichlorid um. Dieses letztere ist flüchtig gemeinsam mit den Chlorsilanen.

Die Anwesenheit von Aluminiumtrichlorid, das einerseits in den genannten Chlorsilanen fast unlöslich ist (die Löslichkeit beträgt nur einige wenige ppm des umgebenden Chlorsilane-Mediums, bei Umgebungs-Temperatur)- andererseits einen erheblichen Dampfdruck (über dem festen, kristallinen Aluminiumchlorid als Sublimationsdruck zu bezeichnen) aufweist, führt dazu, dass sich das feste Aluminiumchlorid über den Gasraum in die gesamte Destillationsvorrichtung verteilt. Die Folgen sind zum einen das Mißlingen der destillativen Abtrennung des Aluminiums aus den Chlorsilanen, zum anderen die Belegung der Destillationsvorrichtung, also der Apparatur mit sublimiertem Aluminiumchlorid. Letzteres ist besonders störend bei der kontinuierlichen Destillation besagter Chlorsilane, weil die dauernde Nachführung von Aluminiumchlorid enthaltender Flüssigkeit zur zunehmenden Belegung mit festem Aluminiumchlorid führt und die Unterbrechung des Prozesses erzwingt.

Es hat nicht an Versuchen gefehlt, dieses Problem zu beseitigen, um eine störungsfreie Destillation besagter Chlorsilane zu erreichen.

Die Destillation besagter Chlorsilane kann bei herabgesetzten Temperaturen im Vakuum vorgenommen werden. Unter diesen Bedingungen ist der Dampfdruck des festen Aluminiumchlorids so gering, dass sein Anteil in der Gasphase bis unter die Löslichkeitsgrenze sinken kann, so dass also das Problem der Abscheidung von festem Aluminiumchlorid in der Apparatur vermieden wird. Allerdings ist es nicht möglich, dadurch den Aluminiumchloridanteil unter den Anteil seines Dampfdrucks am gesamten Dampfdruck zu senken, so dass einerseits die Abtrennung des Aluminiums nur in begrenztem Umfang möglich ist, andererseits das Problem der Aluminiumchlorid-Ausfällung bei erneuter Destillation dadurch erneut auftritt, wenn auch in mengenmäßig reduzierter Form.

Eine Teillösung des Problems ist auch durch das in der DE-OS 21 61 641 beschriebene Verfahren erreicht worden, bei dem der den Synthesereaktor verlassende Gasstrom in zwei Stufen durch Zuspeisung von Siliciumtetrachlorid zunächst auf ca. 250 bis 300°C abgekühlt wird und danach in einem Venturi-Wäscher mit weiterem Siliciumtetrachlorid auf ca. 53°C heruntergekühlt wird, wobei von den Chlorsilanen mitgeführte Bestandteile Eisenchlorid und Aluminiumchlorid ausgefällt werden und im Kondensat verbleiben, und der den wesentlichen Teil der Chlorsilane enthaltende Gasstrom nochmals mit kondensierten Chlorsilanen gewaschen wird und danach kondensiert werden kann. Der restliche Gehalt an Aluminiumchlorid ist dann gegeben durch den Dampfdruck des Aluminiumchlorids bei ca. 53°C. Bei der weiteren destillativen Reinigung der Chlorsilane tritt dann wieder das oben beschriebene Problem der Anreicherung des Aluminiumchlorids im Sumpf auf mit der Folge der Bildung einer festen Phase von Aluminiumchlorid und der unerwünschten Sublimation von Aluminiumchlorid.

Die bisher beschriebenen Verfahren sind aber nicht nur mit dem Nachteil behaftet, das aufgezeigte Problem gar nicht vollständig zu lösen, sie gestatten auch nicht, die in dem Gasstrom als Wärme enthaltene Energie auf hohem Temperaturniveau, z.B. zur Erzeugung von Wasser-Druckdampf zu nutzen. Allerdings ist mit den genannten Verfahren bereits eine kontinuierliche Reaktionsführung zu realisieren.

Für eine weitergehende Entfernung des Aluminiumchlorids sind nach dem Stand der Technik physikalische Operationen nicht ausreichend, vielmehr sind dazu chemische Umsetzungen erforderlich. Dazu gehören die Zusätze von bindungsfähigen Additiven, beispielsweise von sauerstoffhaltigen Silicium-Spezies, allgemein als Siloxane zu bezeichnen, zumeist durch Zusatz von Wasser, Sauerstoff, Ketalen u. a. in situ erzeugt, von Aminen und anderen bindungbefähigten Monomeren und Polymeren, die das Aluminiumchlorid und z. T. auch andere Verunreininigungen so binden, dass es an einer mechanisch abtrennbaren festen Phase gebunden bleibt oder ohne Störungen in der Gasphase. Ebenso ist vorgeschlagen worden, die selektive Abtrennung des Aluminiumchlorids durch Über- oder Durchleiten des Gasstrom über bzw. durch festes Natriumchlorid vorzunehmen destillativ leicht abtrennbar wird.

Aus der US 4,385,964 A ist ein Verfahren zur Abtrennung von Aluminiumtrichlorid aus einem Gemisch enthaltend Siliciumtetrachlorid bekannt. Hierbei stellt das Aluminiumtrichlorid die Hauptkomponente des Gemisches dar. Eine Abtrennung von Aluminiumverunreinigungen aus Chlorsilanen, bei welcher die oben genannten Probleme zu berücksichtigen sind, ist dort nicht erwähnt.

Der Erfindung liegt daher die Aufgabe zugrunde, ein Verfahren zur Entfernung von Aluminium aus Chlorsilanen anzugeben, bei dem in einem kontinuierlichen Prozess ohne Zusatz von Fremdstoffen die Entfernung von Aluminiumchlorid aus den Chlorsilanen Siliciumtetrachlorid und Trichlorsilan auf beliebig niedrige Restgehalte an Aluminium ermöglicht wird.

Diese Aufgabe wird dadurch gelöst, dass das Aluminiumtrichlorid und die Chlorsilane bei einer Temperatur oberhalb ca. 160°C destillativ getrennt werden. Die Destillationstemperatur kann nach oben beispielsweise bis ca. 220°C betragen, doch werden Arbeitstemperaturen von ca. 190°C bis circa 200°C bevorzugt.

Bevorzugt erfolgt der Destillationsprozess in einer mehrstufigen Kolonne. Auf diese Weise gelingt es, am Kopf der Kolonne Aluminiumtrichloridfreie Chlorsilane, also Siliciumtetrachlorid, Trichlorsilan oder ihre Gemische abzunehmen, das Aluminiumtrichlorid in nicht fester Form im Sumpf der Kolonne anzusammeln und die Destillationsvorrichtung, insbesondere also die Kolonne ohne Störung durch Verbackungen dauerhaft und kontinuierlich zu betreiben.

Das Aluminiumtrichlorid kann in Form einer konzentrierten Lösung in den Chlorsilanen als Flüssigkeit in einfacher Weise dem Sumpf der Kolonne kontinuierlich, intermittierend oder diskontinuierlich entnommen werden, vorzugsweise über eine Druckentspannungsvorrichtung. Der Sumpf enthält zwischen ca. 1 % und ca. 98 % Aluminiumchlorid, der Anreicherungsgrad ist abhängig von der Temperatur frei wählbar. Der Druck in der Destillationsvorrichtung ist über die Dampfdrücke der Chlorsilan-Komponenten mit der angewandten Destillationstemperatur verknüpft, er liegt im üblichen Arbeitsbereich von ca. 25 bis ca. 40 bar.

Das erfindungsgemäße Verfahren kann insbesondere eingesetzt werden in Prozessen zur Herstellung von Silan und in Prozessen zur Herstellung von Reinst-Silicium aus Silan.

Ein besonders geeignetes Verfahren zur Herstellung von Silan besteht aus den Schritten
1. Trichlorsilan-Synthese aus Silicium, Siliciumtetrachlorid, Wasserstoff und ggf. einer weiteren Chlorquelle in einem Wirbelschicht-Reaktor unter Druck mit anschließender destillativer Isolierung des erzeugten Trichlorsilans und Rückführung des nicht umgesetzten Siliciumtetrachlorids und gewünschtenfalls des nicht umgesetzten Wasserstoffs.
2. Disproportionierung des Trichlorsilans zu Silan und Siliciumtetrachlorid über die Zwischenstufen Dichlorsilan und Monochlorsilan an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliciumtetrachlorids in die erste Verfahrensstufe.
3. Verwendung des Silans in der im vorangehenden Schritt anfallenden Reinheit oder Reinigung des Silans auf die vom weiteren Verwendungszweck geforderte Reinheit vorzugsweise durch Destillation, besonders bevorzugt durch Destillation unter Druck.

Das Verfahren zur Herstellung von Reinst-Silicium aus Silan, vorzugsweise hergestellt auf dem voranstehend beschriebenen Weg, besteht in der thermischen Zersetzung des Silans, üblicherweise oberhalb 500°C.

Neben der thermischen Zersetzung an elektrisch beheizten Reinst-Silicium-Stäben ist dazu die thermische Zersetzung in einem Wirbelbett aus Reinst-Silicium-Partikeln geeignet, besonders wenn die Herstellung von solar grade Reinst-Silicium angestrebt ist. Zu diesem Zweck kann das Silan mit Wasserstoff oder mit Inertgasen im Verhältnis 1:0 bis 1: 10 gemischt werden.

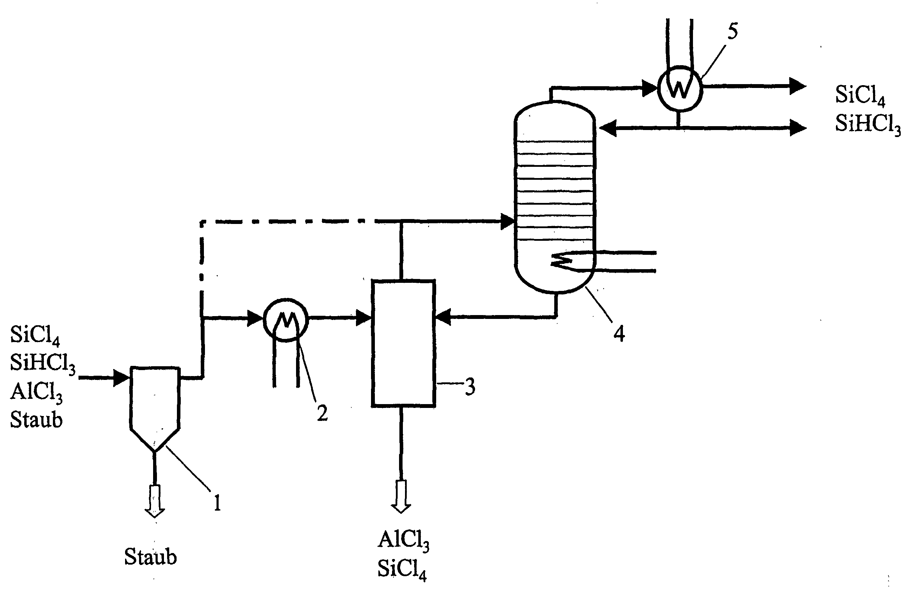

Die Erfindung wird nachfolgend anhand einer ein bevorzugtes Ausführungsbeispiel darstellenden Zeichnung näher erläutert. Die Erfindung ist jedoch in keiner Weise auf das in der Zeichnung dargestellte Ausführungsbeispiel beschränkt. In der einzigen Figur ist schematisch eine erfindungsgemäße Vorrichtung sowie der Ablauf des erfindungsgemäßen Verfahrens dargestellt.

Dabei wird der unter Druck befindliche, von 320°C bis 1000°C heiße Produktgasstrom P aus dem Chlorsilane-Reaktor in einem oder in mehreren in Reihe geschalteten Zyklonen 1 von Staub befreit und gewünschtenfalls anschließend in einem Kühler 2 auf ca. 180 bis 300°C gekühlt. Die Kühlung erfolgt bevorzugt durch Kontakt mit Wärmeaustauschflächen unter Übertragung des Energieinhaltes. Danach wird der Gasstrom unter Übertragung weiterer Energie einschließlich der Kondensationswärme entweder teilweise über eine Flüssigkeitsphase, bestehend aus im wesentlichen Siliciumtetrachlorid und Hochsiedern, an Wärmeaustauschflächen eines Abscheidebehälters 3 kondensiert oder aber gasförmig in den unteren oder mittleren Teil einer Destillationskolonne 4 oder in den Sumpf besagter Destillationskolonne 4 eingeleitet, worauf dann die Abtrennung des Aluminiumchlorids als Hochsieder von den Chlorsilanen in eben dieser Kolonne 4 erfolgt. Am Kopf der Kolonne 4 werden die flüssigen Chlorsilane entnommen und gegebenenfalls einer weiteren Reinigung von anderen verunreinigenden Bestandteilen unterworfen oder direkt seinem Bestimmungszweck zugeführt. Das am Kopf der Kolonne 4 abgezogene Gas wird an einem Kondensator 5 kondensiert.

Die beiden Kondensationsschritte im bevorzugten Ausführungsbeispiel können auch zu einem Schritt zusammengefasst werden, beispielsweise durch Einleiten des heißen Produktgasstroms unmittelbar in die Destillationsvorrichtung, wie mit der strichpunktierten Linie angedeutet ist.

Die Destillationskolonne 4 im Ausfuhrungsbeispiel enthält bevorzugt zwischen 4 und 60 (in der einzigen Figur bezeichneten) theoretische Böden, entweder als Füllkörper, als Gewebepackung oder als Destillationsböden, wobei im unteren Teil der Kolonne 4 selbstreinigende Böden bevorzugt werden.

## Patentansprüche

1. Verfahren zur Abtrennung von Aluminium aus Chlorsilanen, die durch Umsetzung von Silicium mit Chlorwasserstoff oder mit Siliciumtetrachlorid und Wasserstoff hergestellt wurden, wobei das Aluminium als Verunreinigung aufgrund metallischer Verunreinigungen im metallurgischen Silicium als Ausgangsprodukt der Chlorsilan-Herstellung vorliegt, insbesondere Verfahren zur Abtrennung von Aluminiumtrichlorid aus Siliciumtetrachlorid oder Trichlorsilan oder Mischungen von Siliciumtetrachlorid und Trichlorsilan, **dadurch gekennzeichnet, dass** das Aluminiumtrichlorid und die Chlorsilane bei einer Temperatur oberhalb von 160°C und einem Druck zwischen 25 und 40 bar destillativ getrennt werden.

2. Verfahren nach Anspruch 1, **dadurch gekennzeichnet, dass** die Temperatur beim Destillationsprozess zwischen 190°C und 200 °C beträgt.

3. Verfahren nach einem der Ansprüche 1 oder 2, **dadurch gekennzeichnet, dass** das Verfahren in Prozessen zur Herstellung von Silan bzw. Reinst-Silicium aus Silan eingesetzt wird.

4. Verfahren nach einem der Ansprüche 1 bis 3, **dadurch gekennzeichnet, dass** die Destillation in einer mehrstufigen Kolonne (4) erfolgt.

5. Verfahren nach Anspruch 4, **dadurch gekennzeichnet, dass** die Destillation mit einer Destillationskolonne mit zwischen 4 und 60 theoretischen Böden erfolgt.

6. Verfahren nach Anspruch 5, **dadurch gekennzeichnet, dass** die Destillation mit einer Destillationskolonne erfolgt, deren theoretische Böden als Füllkörper, als Gewebepackung oder als Destillationsböden ausgebildet sind.

7. Verfahren nach Anspruch 5 oder 6, **dadurch gekennzeichnet, dass** die Destillation mit einer Destillationskolonne erfolgt, bei der zumindest die unteren theoretischen Böden als selbstreinigende Destillationsböden ausgeführt sind.

## Claims

1. A method for separating aluminium from chlorosilanes, which are produced by reacting silicon with hydrogen chloride or with silicon tetrachloride and hydrogen, with the aliminium being present as impurity by reason of metallic contaminations contained in metallurgical silicon which is the starting product of chlorosilane production, in particular a method for separating aluminium trichloride from silicon tetrachloride or trichlorosilane or from mixtures of silicon tetrachloride or trichlorosilane, **characterised in that** the aluminium trichloride and the chlorosilanes are separated by distillation at a temperature higher than approx. 160°C and at a pressure ranging between 25 and 40 bar.

2. A method according to Claim 1, **characterised in that** the temperature during the distillation process is between approx. 190°C and approx. 200°C.

3. A method according to any one of Claims 1 to 2, **characterised in that** the method is applied in processes for the manufacture of silane and/or hyper-pure silicon from silane.

4. A method according to one of Claims 1 to 3, **characterised in that** the distillation is carried out in a multistage column (4).

5. A method according to Claim 4, **characterised in that** the distillation is carried out in a distillation column comprising between 4 and 60 theoretical bottoms.

6. A method according to Claim 5, **characterised in that** the distillation is carried out in a distillation column, the theoretical bottoms of which are formed as tower packings, fabric packing or as distillation bottoms.

7. A method according to Claim 5 or 6, **characterised in that** the distillation is carried out in a distillation column in which at least the lower theoretical bottoms are self-purifying distillation bottoms.

## Revendications

1. Procédé pour séparer l'aluminium de chlorosilanes, qui ont été produites par transformation de silicium avec du chlorure d'hydrogène ou avec du tétrachlorure de silicium et de l'hydrogène, l'aluminium étant présent en tant qu'impureté sur la base d'impuretés métalliques dans le silicium métallurgique comme un produit de départ de la production de chlorosilane, en particulier, procédé pour séparer le trichlorure d'aluminium du tétrachlorure de silicium ou du trichlorosilane ou des mélanges de tétrachlorure de silicium et de trichlorosilane, **caractérisé en ce que** le trichlorure d'aluminium et les chlorosilanes sont séparés par distillation à une température supérieure à 160° C et à une pression entre 25 et 40 bar.

2. Procédé selon la revendication 1, **caractérisé en ce que** la température lors du processus de distillation se situe entre 190° C et 200° C.

3. Procédé selon l'une quelconque des revendications 1 ou 2, **caractérisé en ce que** le procédé est utilisé dans des processus de production de silane ou de silicium extra-pur à partir de silane.

4. Procédé selon l'une quelconque des revendications 1 à 3, **caractérisé en ce que** la distillation s'effectue dans une colonne (4) à plusieurs étages.

5. Procédé selon la revendication 4, **caractérisé en ce que** la distillation s'effectue avec une colonne de distillation comprenant entre 4 et 60 étages théoriques.

6. Procédé selon la revendication 5, **caractérisé en ce que** la distillation s'effectue avec une colonne de distillation dont les étages théoriques sont constitués de corps de remplissage, de garnitures de tissu, ou d'étages de distillation.

7. Procédé selon la revendication 5 ou 6, **caractérisé en ce que** la distillation s'effectue avec une colonne de distillation dans laquelle au moins les étages théoriques inférieurs sont construits comme des étages de distillation autonettoyants.
